# EUROPEAN PATENT SPECIFICATION

(11) **EP 3 731 979 B1**
(45) Date of publication and mention of the grant of the patent: **25.10.2023**
(21) Application number: 18836659.5
(22) Date of filing: 21.12.2018
(51) Int. Cl.: B09B 5/00, B30B 3/02, B30B 9/12, B30B 15/12, B30B 15/28, F16D 7/00, F16H 35/10

(54) **MACHINE FOR TREATING ORGANIC WASTE AND RELATED CONTROL METHOD**
VORRICHTUNG ZUR ABFÄLLE BEHANDLUNG UND STEUERUNGSVERFAHREN.
MACHINE DE TRAITEMENT DE DÉCHETS ET MÉTHODE DE CONTRÔLE ASSOCIÉE.

(30) Priority: 28.12.2017 IT 201700150259
(43) Date of publication of application: 04.11.2020
(73) Proprietor: WASTE ENGINEERING SAGL, 6900 Paradiso (CH)
(72) Inventor: FORMAGGIO, Daniele, 35042 Este PD (IT)
(74) Representative: De Giorgi, Michele
(86) International application number: PCT/IB2018/060500
(87) International publication number: WO 2019/130192

(56) References cited:
- GB-A- 1 205 947
- GB-A- 2 519 052
- JP-A- H04 238 699
- US-A- 4 291 619
- US-B1- 6 634 508

## Description

### TECHNICAL FIELD

The present disclosure relates to machines for treating waste and more particularly to a worm screw squeezing machine and a machine for treating organic waste, which may be a squeezing or a grinding machine, and a related control method.

### BACKGROUND

Waste squeezing machines allow to treat organic material from waste collection, and to separate at least partially liquid fraction from solid fraction of waste. Unlike grinding machines, which grind the waste, squeezing machines produce an organic residue substantially free of water. The liquid fraction may be used for the production of biogas, while the solid fraction may be burned or used for composting. A machine of this type currently available is, for example, the machine marketed by DOPPSTADT^{™} with the trade name BioPress DBP-205 (http://www.ecoverse.net/products/biopress-dbp-205/), which is well known and will not be illustrated further. Squeezing machines are essentially constituted by a worm screw with a conical squeezing axis which rotates in a cylindrical chamber delimited at least at the bottom by sieving grids with apertures suitable for letting liquids pass through, but not solid materials. The worm screw with a conical axis is shaped so that:
- in correspondence of a waste inlet aperture of the cylindrical chamber, there is a greater distance between the axis of the worm and the walls of the cylindrical chamber;
- by moving in the cylindrical chamber from the waste inlet aperture to the outlet aperture of waste deprived of the liquid fraction, the diameter of the worm screw increases.

By inserting organic waste into the cylindrical chamber through the inlet aperture, it is crushed between the sieving grid which delimits the cylindrical chamber and the portion of the worm screw axis of smaller diameter. By rotating the worm screw, the waste is fed into the cylindrical chamber towards zones where the axis has a larger diameter, whereby it is gradually crushed against the grids which delimit the cylindrical chamber. When the waste has longitudinally crossed the cylindrical chamber, the liquid fraction has already fallen throughout the grids, so only the solid fraction comes out from the outlet aperture.

A limitation of these machines is the fact that the grids or the threads of the screws may be damaged, typically because of hard objects such as stones which, mixed with the waste to be squeezed, are put into the machine. When a stone is put into the machine and gets stuck between the thread and the sieving grid, or get stuck between two opposing threads if the grinding machine has two worm screws, a protection sensor detects an increase of torque required by the motor and stops it.

Unfortunately, even the fastest protection sensors fail to stop the motor as soon as the blockage occurs, so the machine forces the rotation of the screw for a certain time interval before stopping. This time interval, however, is long enough to irreparably damage the machine, which must be taken out of service and repaired before being ready to resume work, with consequent costs for spare parts and for interruption.

This problem sometimes also occurs in grinding machines of the type including hammers, pivoted at one end to a rotating shaft installed in the inner chamber of the respective grinding machine.

JP H04 238699 A discloses a known prior art corresponding to the preamble of claim 1.

### SUMMARY

Studies carried out by the applicant have shown that the fact that protection sensors are unable to instantly detect the presence of a rigid object, such as a stone, is at least partly, if at all, due to the fact that these waste treatment machines have a motor with a hydraulic gear. Hydraulic gears introduce a delay between the instant in which a stone get stuck and the instant in which there is a significant increase of the required motor torque to turn the worm screw. On the other hand, electric motors with hydraulic gear (hydraulic motors) have necessarily limited absorption peaks, indispensable for squeezing machines of organic waste which have motors with relatively limited power. It has been found and is the object of this disclosure a waste treatment machine which solves the aforementioned problems of machines with hydraulic motors, without however renouncing the advantage of having low absorption peaks. As the present machines for treating organic waste, the machine of this disclosure for treating organic waste has a safety sensor which generates an alarm signal to stop the motor when the requested torque exceeds a certain threshold, but has a gear with a friction transmission belt, i.e. not a toothed belt, between a driving pulley and an idle pulley connected to a shaft for squeezing/grinding waste. The friction transmission belt is tightened so as to slip when a nominal maximum torque is exceeded. The protection sensor is configured to detect slippage of the friction transmission belt and to provide in such an event an alarm signal to a control unit that interrupts a normal running of the motor.

According to this disclosure, the organic waste treatment machine may be a single-worm screw or double-worm screw squeezing machine, or a grinding machine with hammers pivoted at the periphery of a shaft installed in the inner chamber of the machine.

The invention is defined by an apparatus according to claim 1 and a cross-related method according to claim 5. Dependent claims define further embodiments.

The claims as filed are an integral part of this disclosure and are herein incorporated by reference.

### BRIEF DESCRIPTION OF THE DRAWINGS

Figure 1 is a partially transparent view of a single worm screw squeezing machine according to the present disclosure.
Figure 2 is a half-transparent perspective view of the machine of Figure 1, with a system having a friction transmission belt tensioned between a driving pulley and an idle pulley.
Figure 3 is a detailed view of the transmission system of the machine of Figure 2.
Figure 4 is a sectional view of the machine of Figures 2 and 3.

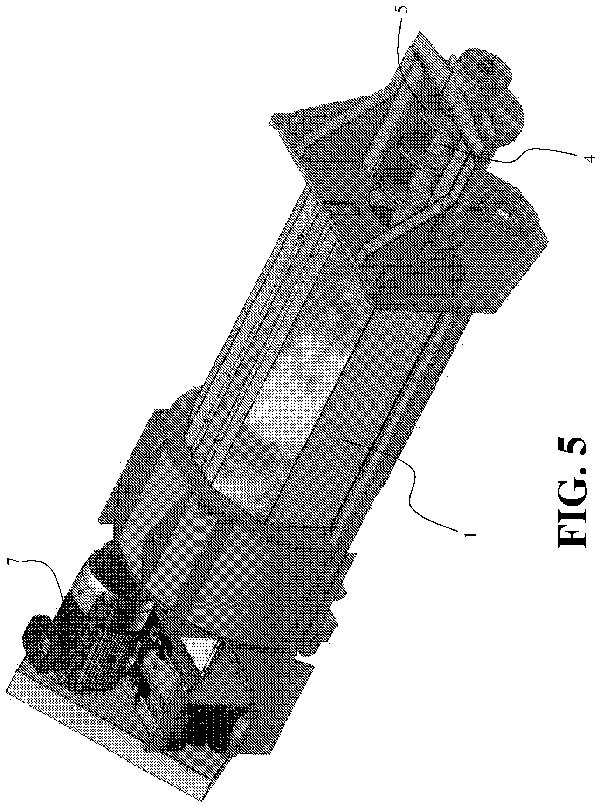

Figure 5 shows the machine of Figure 1 from another point of view.
Figures 6A and 6B are, respectively, a side view and a plan view of a waste squeezing machine according to the present disclosure with two squeezing worm screws.
Figures 7A and 7B show two identical systems with friction transmission belts for moving the respective worm screws of the machine of Figure 6B.
Figure 8 is a perspective view of a grinding machine according to the present disclosure with a system with a transmission belt.
Figure 9 is a sectional view of the grinding machine of Figure 8 according to the present disclosure.

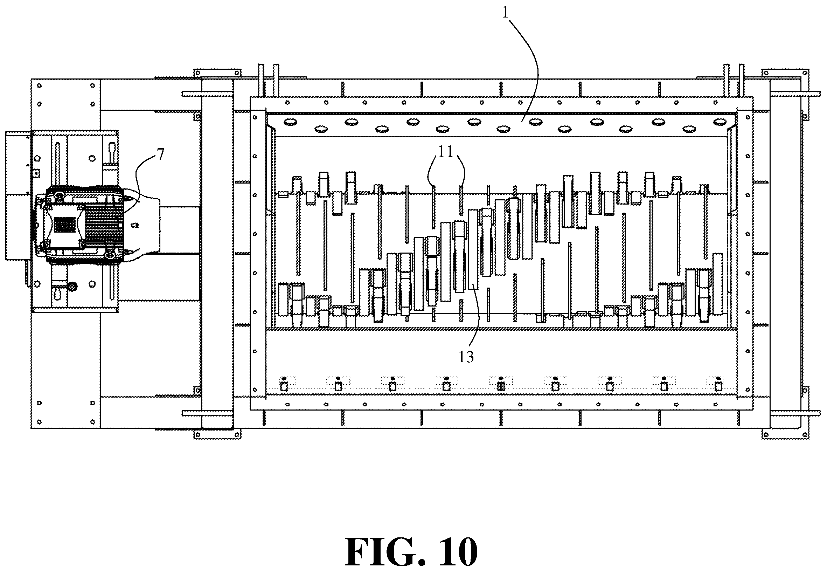

Figure 10 is a top view of the grinding machine of Figure 8.

### DETAILED DESCRIPTION

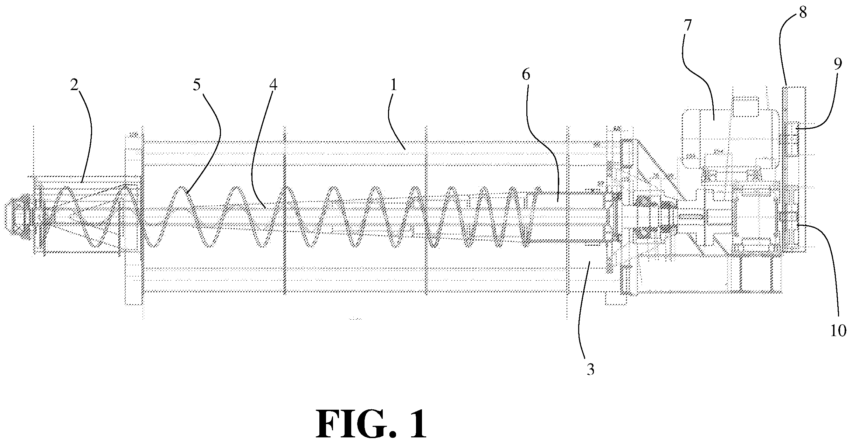

A basic scheme of a squeezing machine according to this disclosure is illustrated in the semi-transparent view of FIG. 1. It comprises a casing 1 defining an inner treatment chamber, with a first waste inlet aperture 2 and a second outlet aperture 3, longitudinally opposite to the first, for discharging a dry fraction of the squeezed waste. The squeezing machine has a worm screw 4 installed in the treatment chamber of the machine, configured so as organic waste enters through the inlet aperture 2 and is drawn longitudinally in the inner chamber by the worm screw 5 and is thereby squeezed against the inner wall of the casing 1 and against an inner sieving grid (not shown) which allows only the liquid fraction to pass through. As well as the already mentioned DOPPSTADT^{™} BioPress DBP-205 machine, the worm screw 4 has a frusto-conical shaft 6 with a growing section so as to progressively reduce space for waste in the inner chamber 1 as waste moves longitudinally towards the second outlet aperture 3.

The shaft 6 of the worm screw is coupled, by means of a transmission system, to the drive shaft of a motor 7, for example an electric motor. Typically, such a motor 7 has a limited power, since the machine has to squeeze organic waste, and may provide a relatively limited torque at start-up.

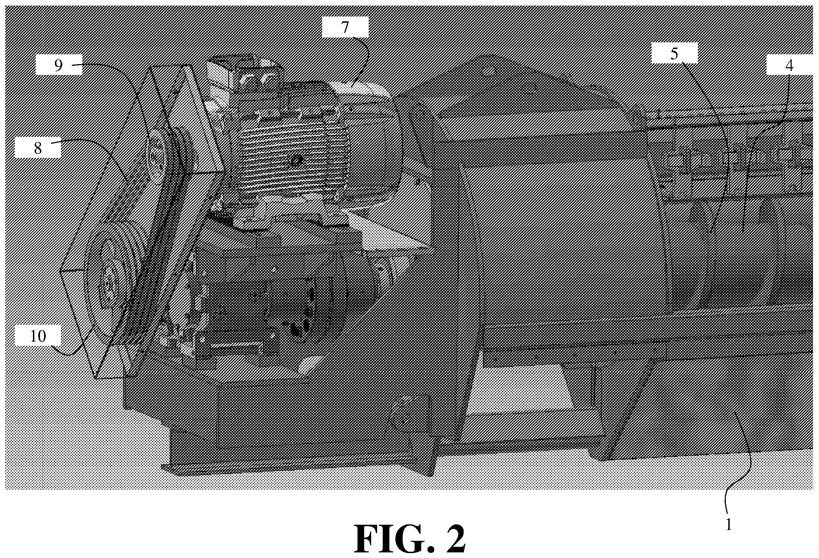

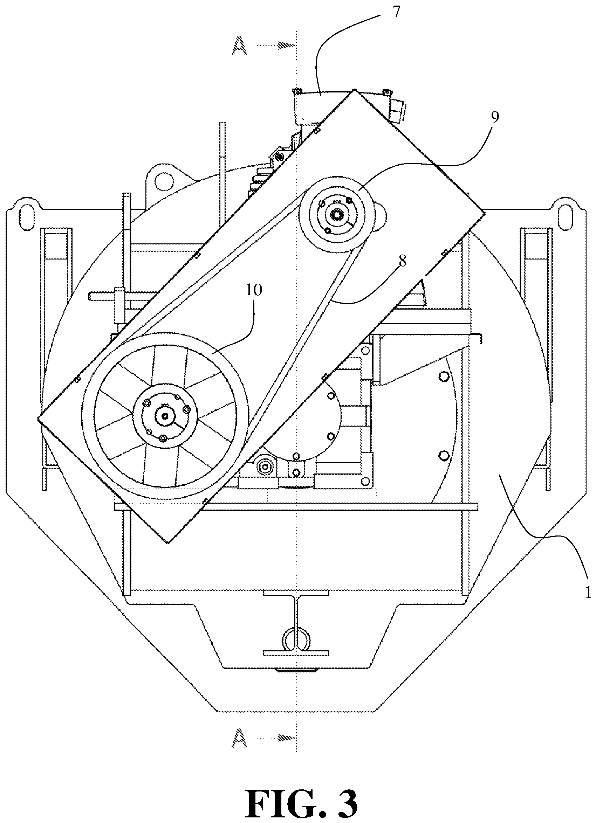

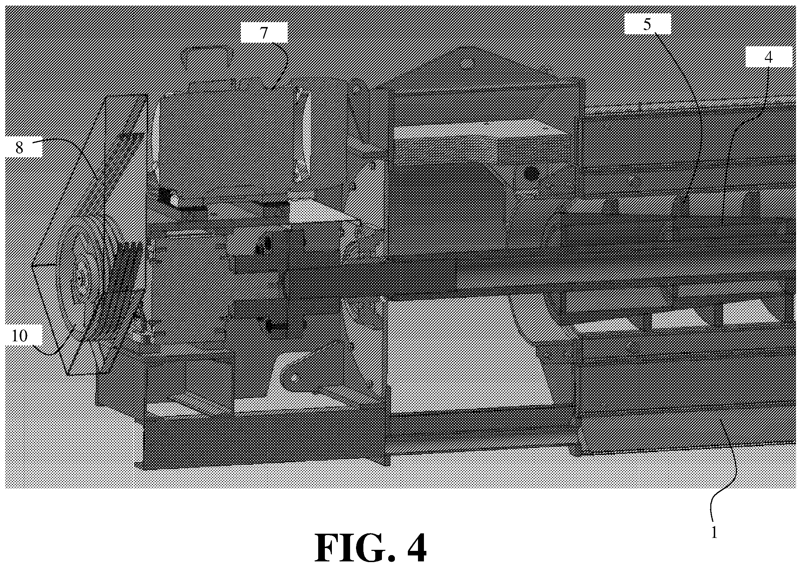

Unlike the known squeezing machines, the motor is not connected through an oleodynamic transmission, but through a transmission system 8 with a friction belt, stretched between a driving pulley 9 fixed to the drive shaft of the motor, and an idle pulley 10 fixed to the shaft 6 of the worm screw 4. The transmission system with a friction belt 8 is more clearly shown in the perspective view of figure 2, in the front view of figure 3 and in the sectional view of figure 4. The friction belt 8 is tensioned between the driving pulley 9 and the idle pulley 10 so as to slip on at least one of the pulleys 9 and 10 when, in order to rotate the idle pulley 10, a torque exceeding a maximum rated value is required.

When a rigid object is stuck between the thread 5 and an inner wall which delimits the treatment chamber 1 while the worm screw 4 is rotating normally, the torque required to rotate the worm screw 4 suddenly increases. If the required torque exceeds a nominal value, the friction belt 8 slips on at least one of the two pulleys 9 and 10. Because of the slippage, there is a sharp reduction of the torque detected at the crankshaft and this event is signaled by a protection sensor (not shown in the figures), functionally connected to a control unit (not shown). The protection sensor generates an alarm signal that is supplied to the control unit, which stops the motor 7.

With the described transmission system the blockage of the screw due to a stuck rigid object is detected immediately. This does not happen, however, in known machines having oleodynamic transmission systems which, due to their operating characteristics, introduce an inevitable delay between the instant in which the blockage event occurs and the instant in which at the drive shaft a resistant torque that exceeds the maximum nominal value is detected.

According to the present disclosure, the squeezing machine may be of the type 4 with a single worm screw 4, as shown in Figure 4, in which the waste is squeezed by the screw 5 of the worm screw 4 against the inner walls of the casing 1 defining the inner chamber.

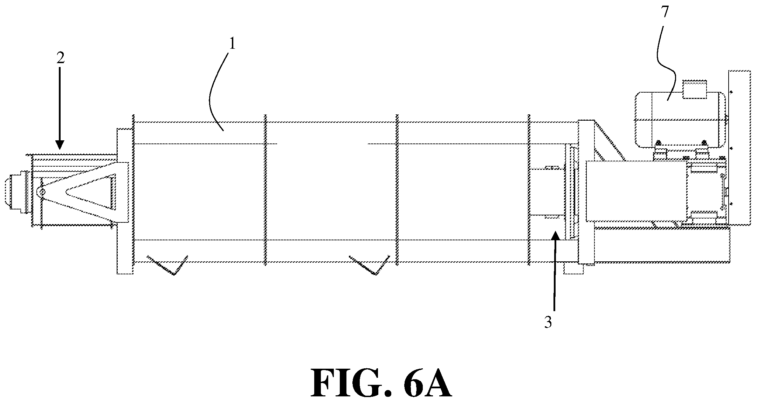

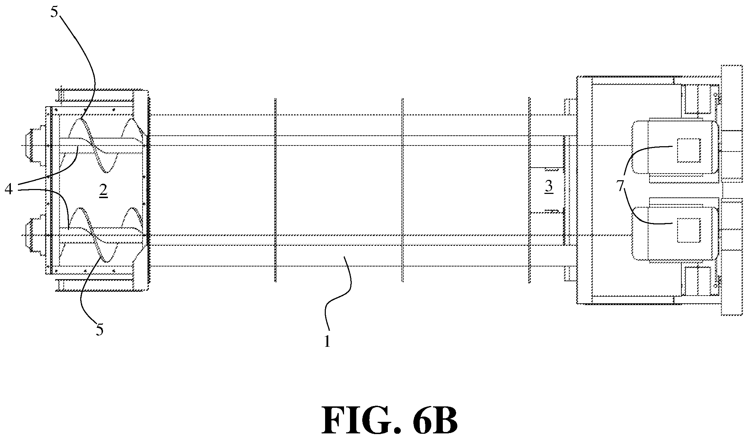

According to the present disclosure, the squeezing machine may be of the type with two worm screws 4a and 4b, as shown in the side view of Figure 6a and in the top view of Figure 6b, in which the waste is squeezed between the threads 5a and 5b of the worm screws 4a and 4b and against the inner walls of the casing 1. A similar double worm screw system is present in the aforementioned BioPress DBP 250 machine of the DOPPSTADT ^{™} to crush newly introduced waste prior of squeezing it.

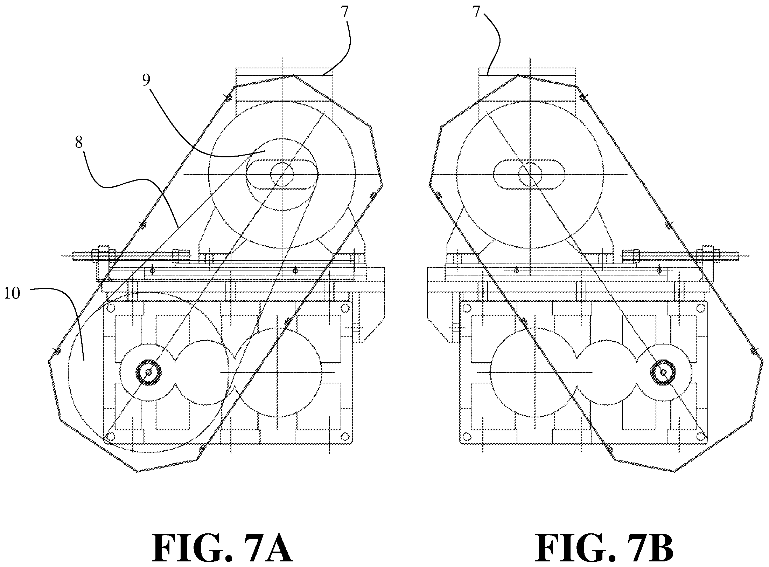

In the machine of the present disclosure with two worm screws illustrated in figure 6b, the worm screws 4 serve both to crush the just entered waste, so as to break the bag or the packaging in which it is contained, as well as to convey it inside of the squeezing chamber. Each one of the two worm screws 4 is moved by a respective motor 7 (Figure 6b) and each motor 7 is connected to the respective worm screw 4 through a respective transmission system, shown in Figures 7a and 7b. Each transmission system has a friction belt 8 stretched between the respective driving pulley 9 and the respective idle pulley 10, as illustrated with reference to Figure 3.

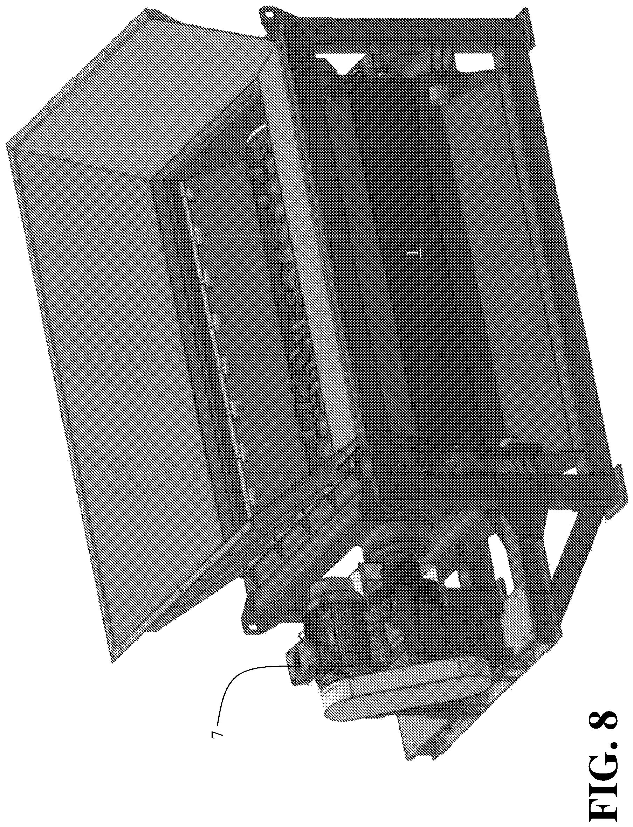

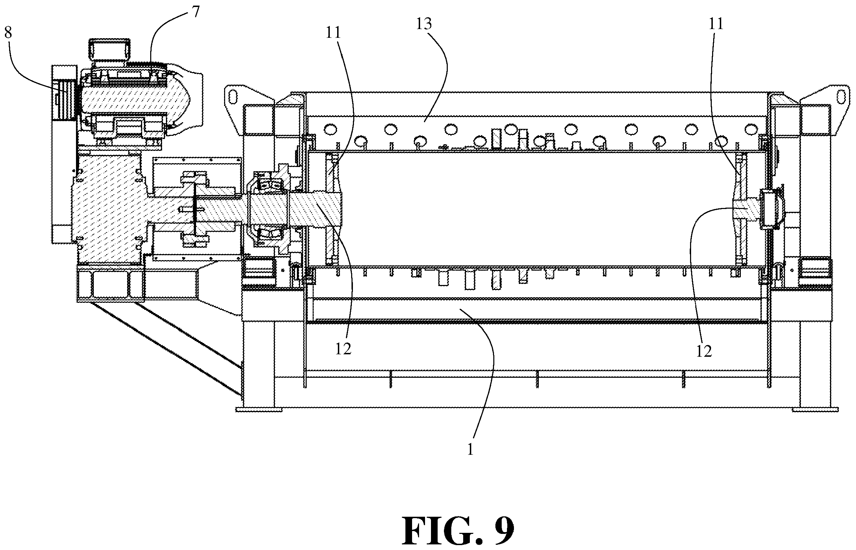

The friction belt transmission system 8 described with reference to Figure 3 may also be used to make waste-grinding machines, of the type illustrated in Figure 8. Such grinding machines have a casing 1 which defines an inner treatment chamber, have discs 11 fixed to a shaft 12 which is rotated by a motor 7, and hammers 13 with sharp profiles pivoted on discs 11. A grinding machine of this type is for example disclosed in Italian patent application No. 102016000105648 filed on October 20, 2016 in the name of Formaggio Sri Costruzioni Meccaniche, to which reference is made for construction and operating details that will not be illustrated further. Another known machine of this type is the KOMPTECH ^{™} shredding machine, currently sold under the trade name TERMINATOR (https://www.komptech.com/en/products-komptech/pdetails/terminator-direct.html). As shown in the sectional view of Figure 8 and in the top view of Figure 9, waste is inserted from above through the inlet opening 2 and comes out shredded by falling through the perforated grids 13, visible in Figure 8, which close the inner chamber.

According to a feature of the present invention, the driving torque is transmitted from the motor 7 to the shaft 12 by a friction belt transmission system 8, stretched between a driving pulley and an idle pulley (not shown) so as to slip on at least one of them when a torque exceeding a maximum nominal value is exceeded. As well as the squeezing machine of FIG. 2, also this grinding machine of the present disclosure has a protection sensor (not shown), which detects a slippage of the friction belt 8 on the driving pulley and/or the idle pulley and generates an alarm signal when this happens, and a control unit that receives the alarm signal and stops the normal running of the motor, preventing damage to the sieving grid.

Several ways of managing a condition in which the friction belt slips on at least one pulley may be easily identified. First, the control unit may stop the motor promptly to avoid damage to parts of the machine. Then, the control unit may control the motor 7 so as to make it rotate backwards shortly, trying to free the object that got stuck, and then restart it in the forward direction of rotation. If the friction belt 8 moves on the pulleys without slipping, then the maneuver has been successful and the machine may continue operating normally. If this does not happen, the control unit may stop the motor 7 and generate an alarm signal to request the intervention of a technician. By opening the casing 1 from below, any material contained in the inner treatment chamber falls out and with it also the rigid object that caused the blockage. Then the casing 1 is closed, the motor 7 is restarted and the waste fallen from the inner treatment chamber is treated separately to find and eliminate the rigid object.

As can be easily understood, in the grinding machines of the present disclosure the risk of damaging the sieving grids or the threads of the worm screws is avoided. In fact, even if a rigid object is put into the machine, it is either expelled through the discharge opening 3 without causing any damage, or, if it gets stuck, the protection sensor immediately detects the blockage signaling it to the control unit which stops the motor 7, preventing the worm screw 4 or other parts of the machine (for example the sieving grid, if present) from being damaged.

## Claims

1. A machine for treating organic waste, comprising:
a casing (1) defining an inner treatment chamber delimited at least in part by a sieving grid, and an inlet aperture (2) for inserting waste at an end of the chamber and an outlet aperture (3) for discharging at an opposite end in respect to the inlet aperture (2);
at least a shaft (6) installed in said inner chamber, equipped with mechanical means for grinding or pressing the inserted organic waste against the sieving grid or against at least a wall that delimits the inner treatment chamber;
a first motor (7), functionally coupled to said shaft (6);
a first transmission system configured to transmit to said shaft (6) a rotation motion of the shaft (6) along a longitudinal axis, generated by said first motor (7);
a first protection sensor, configured to sense a blockage condition of a rigid object that hinders rotation of the shaft (6) and to generate a related alarm signal when said blockage condition is detected;
a control unit functionally coupled to said first protection sensor and to the first motor and configured for stopping a run of the first motor (7) when said alarm signal is generated;
**characterized in that**
said first transmission system comprises a first driving pulley (9) connected to the motor (7), a second idle pulley (10) connected with the shaft (6), and a friction transmission belt (8) tightened between the first driving pulley (9) and the second idle pulley (10), said belt (8) being configured to slip against said pulleys (9, 10) when a torque exceeding a nominal maximum value for rotating said shaft (6) is requested;
said first protection sensor is configured to sense a slippage of said friction transmission belt (8) and to generate the alarm signal when said slippage is detected.

2. The machine according to claim 1, configured for squeezing an organic waste in said inner treatment chamber delimited by said sieving grid, wherein said shaft (6) equipped with mechanical means is a first worm screw (4) having a profile configured to squeeze the humid waste against said sieving grid when the worm screw (4) is rotated by said first motor (7).

3. The machine according to claim 2, comprising:
- a second worm screw identical with said first worm screw (4), installed in said inner chamber of the machine and configured to grind organic waste by cooperating with said worm screw (4),
- a second motor identical with said first motor (7),
- a second transmission system identical with said first transmission system, configured to transmit to the shaft (6) of the second worm screw a rotation motion along a longitudinal axis, generated by said second motor,
- a second protection sensor identical with said first protection sensor, configured to detect a blockage condition of a rigid object that hinders a rotation of the shaft (6) and to generate a related alarm signal when said blockage condition is detected;
wherein said control unit is functionally coupled also with said second protection sensor and with said second motor, and it is configured to stop the run of the second motor when said second protection sensor generates the respective alarm signal.

4. The machine according to claim 1, configured to grind organic waste in said inner treatment chamber delimited at least from the bottom by said sieving grid, wherein said mechanical means comprise:
- a plurality of disks (11) fixed to said shaft (6) along radial planes, and
- a plurality of hammers (13) each having an end tied to one of said disks (11), said hammers (13) being configured to be dragged into rotation by said shaft (6) hitting waste placed in said inner chamber.

5. A method of controlling a machine for treating organic waste according to claim 1, comprising the following operations:
sensing a slippage of the friction transmission belt (8) against at least said first driving pulley (9) connected to the first motor (7) and/or said second idle pulley (10) connected with the shaft (6), and generating an alarm signal when said slippage is detected;
stopping a normal run condition of the first motor (7) when said alarm signal is generated.

6. The method according to claim 5, further comprising the following operations:
when said alarm signal is generated, running backwards the first motor (7) for a pre-established time, then running the first motor (7) in said normal run condition.

## Patentansprüche

1. Maschine zum Aufbereiten von organischem Abfall, umfassend:
ein Gehäuse (1), das eine innere Aufbereitungskammer, die mindestens teilweise durch ein Siebgitter begrenzt ist, und eine Einlassöffnung (2) zum Einführen des Abfalls an einem Ende der Kammer und eine Auslassöffnung (3) zum Abgeben an einem gegenüberliegenden Ende in Bezug auf die Einlassöffnung (2) definiert;
mindestens eine Welle (6), die in der inneren Kammer installiert ist, die mit mechanischen Mitteln zum Mahlen oder Pressen des eingeführten organischen Abfalls gegen das Siebgitter oder gegen mindestens eine Wand ausgestattet ist, die die innere Aufbereitungskammer begrenzt;
einen ersten Motor (7), der mit der Welle (6) funktionell gekoppelt ist;
ein erstes Übertragungssystem, das konfiguriert ist, um eine Drehbewegung der Welle (6) entlang einer Längsachse, die durch den ersten Motor (7) erzeugt wird, an die Welle (6) zu übertragen;
einen ersten Schutzsensor, der konfiguriert ist, um einen Blockierungszustand eines starren Objekts zu erfassen, das eine Drehung der Welle (6) behindert, und um ein verwandtes Alarmsignal zu erzeugen, wenn der Blockierungszustand erkannt wird;
eine Steuereinheit, die mit dem ersten Schutzsensor und mit dem ersten Motor funktionell gekoppelt und konfiguriert ist, um einen Lauf des ersten Motors (7) zu stoppen, wenn das Alarmsignal erzeugt wird;
**dadurch gekennzeichnet, dass**
das erste Übertragungssystem eine erste Antriebsscheibe (9) umfasst, die mit dem Motor (7) verbunden ist, eine zweite Losscheibe (10), die mit der Welle (6) verbunden ist, und einen Reibungsübertragungsriemen (8), der zwischen der ersten Antriebsscheibe (9) und der zweiten Losscheibe (10) angezogen ist, wobei der Riemen (8) konfiguriert ist, um gegen die Scheiben (9, 10) durchzuschlupfen, wenn ein Drehmoment, das einen nominalen Maximalwert zum Drehen der Welle (6) überschreitet, angefordert wird;
der erste Schutzsensor konfiguriert ist, um einen Schlupf des Reibungsübertragungsriemens (8) zu erfassen und um das Alarmsignal zu erzeugen, wenn der Schlupf erkannt wird.

2. Maschine nach Anspruch 1, die zum Zusammendrücken eines organischen Abfalls in der inneren Aufbereitungskammer, der durch das Siebgitter begrenzt ist, konfiguriert ist, wobei die Welle (6), die mit mechanischen Mitteln ausgestattet ist, eine erste Schneckenschraube (4) ist, die ein Profil aufweist, das konfiguriert ist, um den feuchten Abfall gegen das Siebgitter zusammenzudrücken, wenn die Schneckenschraube (4) durch den ersten Motor (7) gedreht wird.

3. Maschine nach Anspruch 2, umfassend:
- eine zweite Schneckenschraube, die mit der ersten Schneckenschraube (4) identisch ist, die in der inneren Kammer der Maschine installiert und konfiguriert ist, um organischen Abfall durch Zusammenwirken mit der Schneckenschraube (4) zu mahlen,
- einen zweiten Motor, der mit dem ersten Motor (7) identisch ist,
- ein zweites Übertragungssystem, das mit dem ersten Übertragungssystem identisch ist, das konfiguriert ist, um eine Drehbewegung an die Welle (6) der zweiten Schneckenschraube entlang einer Längsachse zu übertragen, die durch den zweiten Motor erzeugt wird,
- einen zweiten Schutzsensor, der mit dem ersten Schutzsensor identisch ist, der konfiguriert, um einen Blockierungszustand eines starren Objekts zu erkennen, das eine Drehung der Welle (6) behindert, und um ein verwandtes Alarmsignal zu erzeugen, wenn der Blockierungszustand erkannt wird;
wobei die Steuereinheit ebenso mit dem zweiten Schutzsensor und mit dem zweiten Motor funktionell gekoppelt ist und sie konfiguriert ist, um den Lauf des zweiten Motors zu stoppen, wenn der zweite Schutzsensor das jeweilige Alarmsignal erzeugt.

4. Maschine nach Anspruch 1, die konfiguriert ist, um organischen Abfall in der inneren Aufbereitungskammer zu mahlen, die mindestens von der Unterseite durch das Siebgitter begrenzt ist, wobei die mechanischen Mittel umfassen:
- eine Vielzahl von Platten (11), die an der Welle (6) entlang Radialebenen befestigt ist, und
- eine Vielzahl von Hämmern (13), die jeweils ein Ende aufweist, das an eine der Platten (11) gebunden ist, wobei die Hämmer (13) konfiguriert sind, um durch die Welle (6) in die Drehung gezogen zu werden, die Abfall treffen, der in der inneren Kammer platziert wird,.

5. Verfahren zum Steuern einer Maschine zum Aufbereiten von organischem Abfall nach Anspruch 1, umfassend die folgenden Vorgänge:
Erfassen eines Schlupfes des Reibungsübertragungsriemens (8) gegen mindestens die erste Antriebsscheibe (9), die mit dem ersten Motor (7) verbunden ist, und/oder die zweite Losscheibe (10), die mit der Welle (6) verbunden ist, und Erzeugen eines Alarmsignals, wenn der Schlupf erkannt wird;
Stoppen eines normalen Laufzustands des ersten Motors (7), wenn das Alarmsignal erzeugt wird.

6. Verfahren nach Anspruch 5, ferner umfassend die folgenden Vorgänge:
wenn das Alarmsignal erzeugt wird, Rückwärtslaufen des ersten Motors (7) für eine zuvor bestimmte Zeit, dann Laufenlassen des ersten Motors (7) in dem normalen Laufzustand.

## Revendications

1. Machine de traitement de déchets organiques, comprenant :
un boîtier (1) définissant une chambre de traitement interne délimitée au moins en partie par une grille de tamisage, et une ouverture d'entrée (2) pour insérer des déchets à une extrémité de la chambre et une ouverture de sortie (3) pour décharger à une extrémité opposée par rapport à l'ouverture d'entrée (2) ;
au moins un arbre (6) installé dans ladite chambre interne, équipé d'un moyen mécanique de broyage ou de pressage des déchets organiques insérés contre la grille de tamisage ou contre au moins une paroi délimitant la chambre interne de traitement ;
un premier moteur (7), accouplé fonctionnellement audit arbre (6) ;
un premier système de transmission configuré pour transmettre audit arbre (6) un mouvement de rotation de l'arbre (6) le long d'un axe longitudinal, généré par ledit premier moteur (7) ;
un premier capteur de protection, configuré pour détecter une condition de blocage d'un objet rigide qui entrave la rotation de l'arbre (6) et pour générer un signal d'alarme lié lorsque ladite condition de blocage est détectée ;
une unité de commande couplée fonctionnellement audit premier capteur de protection et au premier moteur et configurée pour arrêter une course du premier moteur (7) lorsque ledit signal d'alarme est généré ;
**caractérisé en ce que**
ledit premier système de transmission comprend une première poulie d'entraînement (9) reliée au moteur (7), une seconde poulie folle (10) reliée à l'arbre (6), et une courroie de transmission de friction (8) serrée entre la première poulie d'entraînement (9) et la seconde poulie folle (10), ladite courroie (8) étant conçue pour glisser contre lesdites poulies (9, 10) lorsqu'un couple dépassant une valeur maximale nominale pour faire tourner ledit arbre (6) est demandé ;
ledit premier capteur de protection est configuré pour détecter un glissement de ladite courroie de transmission de friction (8) et pour générer le signal d'alarme lorsque ledit glissement est détecté.

2. Machine selon la revendication 1, configurée pour comprimer un déchet organique dans ladite chambre de traitement interne délimitée par ladite grille de tamisage, dans laquelle ledit arbre (6) équipé d'un moyen mécanique est une première vis sans fin (4) ayant un profil conçu pour comprimer le déchet humide contre ladite grille de tamisage lorsque la vis sans fin (4) est tournée par ledit premier moteur (7).

3. Machine selon la revendication 2, comprenant :
- une seconde vis sans fin identique à ladite première vis sans fin (4), installée dans ladite chambre interne de la machine et conçue pour broyer des déchets organiques en coopérant avec ladite vis sans fin (4),
- un second moteur identique audit premier moteur (7),
- un second système de transmission identique audit premier système de transmission, configuré pour transmettre à l'arbre (6) de la seconde vis sans fin un mouvement de rotation selon un axe longitudinal, généré par ledit second moteur,
- un second capteur de protection identique audit premier capteur de protection, configuré pour détecter une condition de blocage d'un objet rigide qui entrave une rotation de l'arbre (6) et pour générer un signal d'alarme lié lorsque ladite condition de blocage est détectée ;
dans lequel ladite unité de commande est couplée fonctionnellement audit second capteur de protection et audit second moteur, et est configurée pour arrêter la course du second moteur lorsque ledit second capteur de protection génère le signal d'alarme respectif.

4. Machine selon la revendication 1, configurée pour broyer des déchets organiques dans ladite chambre de traitement interne délimitée au moins depuis le fond par ladite grille de tamisage, ledit moyen mécanique comprenant :
- une pluralité de disques (11) fixés audit arbre (6) le long de plans radiaux, et
- une pluralité de marteaux (13) ayant chacun une extrémité reliée à un desdits disques (11), lesdits marteaux (13) étant conçus pour être entraînés en rotation par ledit arbre (6) frappant des déchets placés dans ladite chambre interne.

5. Procédé de commande d'une machine de traitement de déchets organiques selon la revendication 1, comprenant les opérations suivantes :
la détection d'un glissement de la courroie de transmission à friction (8) contre au moins ladite première poulie d'entraînement (9) reliée au premier moteur (7) et/ou ladite seconde poulie folle (10) reliée à l'arbre (6), et la génération d'un signal d'alarme lorsque ledit glissement est détecté ;
l'arrêt d'un état de fonctionnement normal du premier moteur (7) lorsque ledit signal d'alarme est généré.

6. Procédé selon la revendication 5, comprenant en outre les opérations suivantes :
lorsque ledit signal d'alarme est généré, faire avancer le premier moteur (7) pendant un temps préétabli, puis exécuter le premier moteur (7) dans ledit état de fonctionnement normal.
